# EUROPEAN PATENT APPLICATION

(11) **EP 3 595 287 A1**
(43) Date of publication of application: **15.01.2020**
(21) Application number: 18305912.0
(22) Date of filing: 10.07.2018
(51) Int. Cl.: H04N 5/232, H04N 5/247

(54) **CAPTURING VIDEO CONTENT WITH AT LEAST TWO CAMERAS OF A MULTI-CAMERA RIG**

(71) Applicant: InterDigital CE Patent Holdings, 75017 Paris (FR)
(72) Inventor: POULI, Tania, 35576 Cesson-Sévigné (FR); KERVEC, Jonathan, 35576 Cesson-Sévigné (FR); MORVAN, Patrick, 35576 Cesson-Sévigné (FR)
(74) Representative: Huchet, Anne

(57) **Abstract**

A method for capturing video content with at least two cameras of a multi-camera rig and a corresponding multi-camera rig are described. A part of the video content is captured with one of the at least two cameras. An object in the captured part of the video content is select. The multi-camera rig is automatically moved such that the one of the at least two cameras follows the selected object.

## Description

### TECHNICAL FIELD

The present principle relates to a method for capturing video content with at least two cameras of a multi-camera rig and a corresponding multi-camera rig.

### BACKGROUND

This section is intended to introduce the reader to various aspects of art, which may be related to the present embodiments that are described below. This discussion is believed to be helpful in providing the reader with background information to facilitate a better understanding of the various aspects of the present disclosure. Accordingly, it should be understood that these statements are to be read in this light.

There is a growing interest in 360° video content since it allows to change the way video content is perceived due to the possibility to place viewers into the middle of the viewed content and to freely choose the viewpoint. Unless the 360° video content is pure virtual reality content completely generated on a computer, there is a need to capture the real world by cameras.

When capturing 360° video content, multiple cameras are positioned as close as possible on a camera rig, wherein each camera captures a part of the full 360 degrees video content at the same time. For simpler, consumer level models as less as two cameras with wide angle lenses could be used. On the other hand, in more complex camera rigs for semi-professional or professional applications more than a dozen cameras could be implemented. Since the individual images captured from each camera cover only a limited field of view towards a particular direction, the images need to be stitched together to form a single continuous 360° image before the content can be edited or viewed, e.g. by means of a virtual reality headset.

Stitching relies on finding similar features in adjacent views, which are used to calculate the transformation necessary to align the two views. The result of such stitching is not always perfect. There are several reasons for the deficiencies. Problems caused by different camera characteristics, leading to slightly different colors, contrast or focus, are relatively simple to overcome by using cameras that are identical in construction. Also the fact that each camera view is just a projection of a 3D scene in a 2D image and that the point of views between two adjacent cameras that are different can result in discontinuities in these areas but can be particularly addressed by the used stitching algorithm. However, reducing or preventing artefacts due to moving objects in overlapping areas of two cameras is a problem even if done offline with a powerful stitching algorithm.

### SUMMARY

In a first aspect, a method for capturing video content with at least two cameras of a multi-camera rig is described. The method comprises:
- capturing a part of the video content with one of the at least two cameras;
- selecting an object in the captured part of the video content; and
- automatically moving the multi-camera rig such that the one of the at least two cameras follows the selected object.

In a second aspect, a multi-camera rig is described. The multi-camera rig comprises:
- a video capture system with at least two cameras;
- a moving device; and
- a processor configured to select an object in a part of video content captured with one of the at least two cameras, to track the selected object, and to cause the moving device to move the video capture system such that the one of the at least two cameras follows the tracked object.

The above presents a simplified summary of the subject matter in order to provide a basic understanding of some aspects of subject matter embodiments. This summary is not an extensive overview of the subject matter. It is not intended to identify key/critical elements of the embodiments or to delineate the scope of the subject matter. Its sole purpose is to present some concepts of the subject matter in a simplified form as a prelude to the more detailed description that is presented later.

### BRIEF DESCRIPTION OF THE DRAWINGS

The proposed method and apparatus is best understood from the following detailed description when read in conjunction with the accompanying drawings. The drawings include the following figures briefly described below:
FIG. 1 illustrates an example of artefacts in a stitched 360 degree image resulting from a movement in an overlapping area of cameras capturing parts of the 360 degree image.
FIG. 2 illustrates schematically a top-down illustration of an exemplary 360 degree camera rig with six cameras.
FIG. 3 illustrates a top-down illustration of overlapping views for the exemplary 360 degree camera shown in Fig. 2.
FIG. 4 illustrates an example of an object moving through an overlapping area of two adjacent cameras of a fixed 360 degree camera rig.
FIGS. 5A - 5C illustrate the video acquisition of a moving object in accordance to one embodiment of the present disclosure at different points of time T, T+1, and T+2.
FIG. 6 illustrates a flowchart of an exemplary method for capturing video content with at least two cameras of a multi-camera rig in accordance with one embodiment of the present disclosure.
FIG. 7 illustrates a schematic block diagram of a multi-camera rig in accordance with one embodiment of the present disclosure.

It should be understood that, the drawings are for purposes of illustrating the concepts of the disclosure and are not necessarily the only possible configuration for illustrating the disclosure.

### DETAILED DESCRIPTION

All examples and conditional language recited herein are intended for educational purposes to aid the reader in understanding the principles of the disclosure and the concepts contributed by the inventor to furthering the art and are to be construed as being without limitation to such specifically recited examples and conditions.

It should be understood that the elements shown in the figures may be implemented in various forms of hardware, software or combinations thereof. Preferably, these elements are implemented in a combination of hardware and software on one or more appropriately programmed general-purpose devices, which may include a processor, memory and input/output interfaces. Herein, the phrase "coupled" is defined to mean directly connected to or indirectly connected with through one or more intermediate components. Such intermediate components may include both hardware and software-based components.

It will be appreciated by those skilled in the art that the flow diagram represents various processes, which may be executed by a computer or processor, whether or not, such computer or processor is explicitly shown. Similarly, it will be appreciated that the block diagram presented herein represents a conceptual view of an illustrative circuitry embodying the principles of the disclosure.

The functions of the various elements shown in the figures may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Other hardware, conventional and/or custom, may also be included. Similarly, any switches shown in the figures are conceptual only. Their function may be carried out through the operation of program logic, through dedicated logic, through the interaction of program control and dedicated logic, or even manually, the particular technique being selectable by the implementer as more specifically understood from the context.

In the claims hereof, any element expressed as a means for performing a specified function is intended to encompass any way of performing that function including, for example, a) a combination of circuit elements that performs that function or b) software in any form, including, therefore, firmware, microcode or the like, combined with appropriate circuitry for executing that software to perform the function.

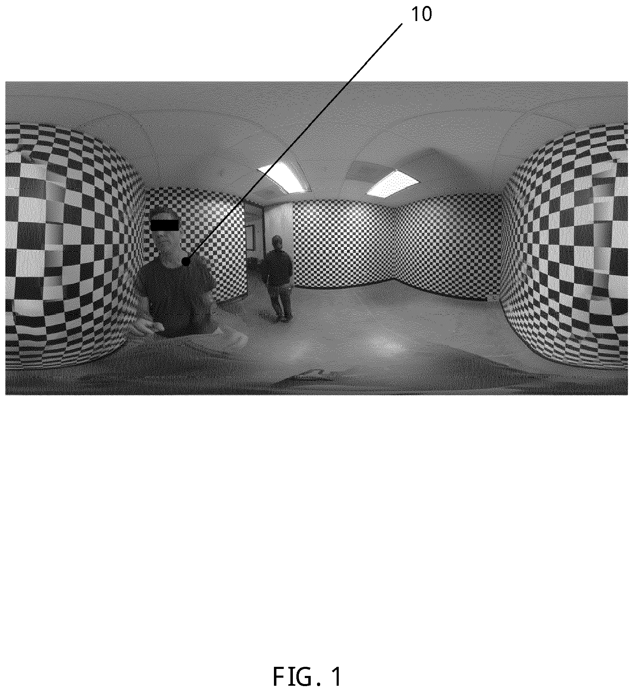

FIG. 1 shows an example of artefacts resulting from a movement in an overlapping area of two cameras. Depicted is a stitched 360° image with two persons in a closed room, wherein person 10 has moved during capture of the image. The walls of the room are sharp besides the perspectival distortion, and also the head of person 10 is undistorted (the black bar is not a distortion but has been added to protect the privacy of the person depicted). However, there is a very blurred representation of the arms and the lower body of person 10.

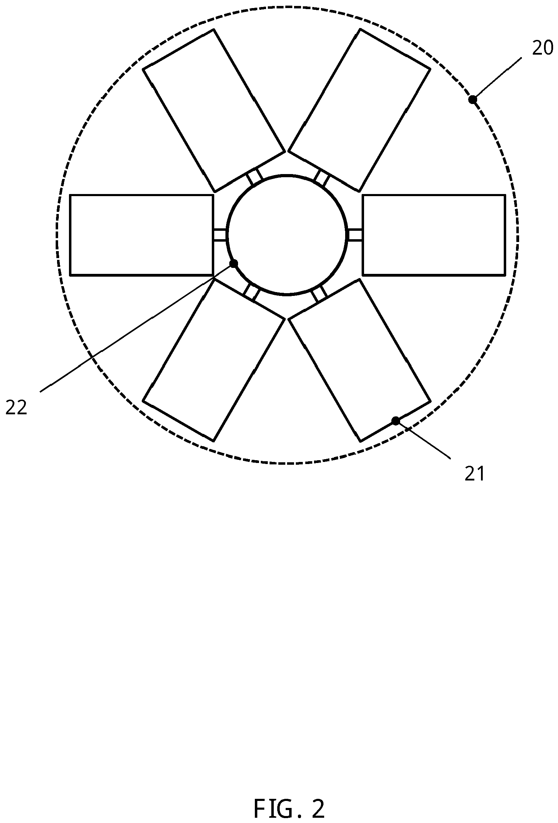

FIG. 2 illustrates schematically a top-down illustration of an exemplary 360 degree camera rig 20. The 360 degree camera rig comprises six cameras 21, each having camera an optical system with a lens or lens system and a digital image sensor such as a CCD or CMOS-sensor. The angle between every two neighbouring cameras is 60 degrees. However, this number of cameras is just an example, it is also possible to use more or less than the shown six cameras. Furthermore, the angles between neighbouring cameras not necessarily have to be identical.

The cameras 21 are arranged in such a way that they horizontally cover the complete 360 degree of the scene to be captured. In addition, there can be further cameras for capturing areas of the scene below or above the camera rig.

Each of the cameras is mounted on a radial arm extending outwardly from a center axial column 22. The center axial column could be fixed on a tripod stand or on moving objects like for example a fixed or stabilized arm on a moving car or drone. Furthermore, the images of the video captured by each of the cameras can be provided to an image processing unit performing the stitching via electrical connections like cables.

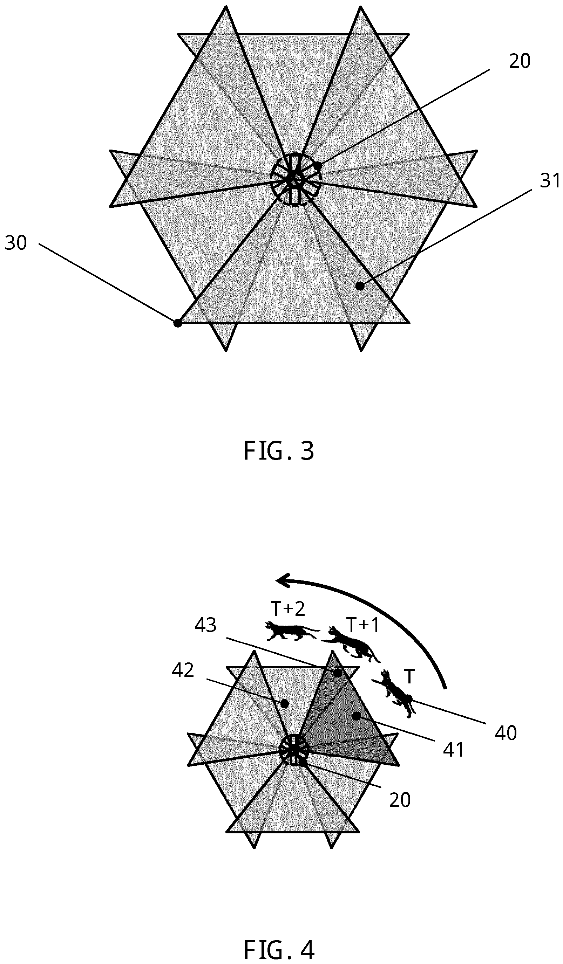

FIG. 3 illustrates a top-down illustration of overlapping views for the exemplary 360 degree camera 20 shown in Fig. 2. Each of the six individual cameras has an angle of view 30 which describes the angular extent of the surrounding scene that is imaged by that particular camera. The angle of view depends in particular on parameters like the focal length of the lens and the dimensions of the sensor used in the camera. In the shown example, the angle of view is larger than 60 degrees which results for the angularly equally-distributed six cameras in horizontal overlapping zones 31 of the views of neighbouring cameras.

FIG. 4 illustrates an example of an object moving through an overlapping area of two adjacent cameras of the exemplary 360 degree camera 20. In this example, the moving object 40 is a cat that might move around at the location where the 360 degree image shall be captured. At a first point in time T the cat is completely and solely in the central part 41 of the angle of view of a first camera, and, similarly, at a later point in time T+2 completely and solely in the central part 42 of the angle of view of a second camera. However, at an intermediate point in time T+1 the cat is moving in an overlapping area 43 of the angle of views of the first and second camera, which can cause the above mentioned artefacts when stitching the views together to generate a 360 degree image.

In the example of FIG. 4 the 360 degree camera rig is fixed, i.e. the camera rig including the six cameras is in the same position at the moments T, T+1, and T+2. The inventors now realized that the generation of artefacts during the stitching process can be prevented by avoiding a movement of an object, or at least the predominant object in a particular scene, in the overlapping areas of adjacent cameras. Based upon this, the inventors further realized that such a movement of an object in the overlapping areas can be avoided by ensuring that an object originally not being in an overlapping area subsequently does not cross an overlapping area and that this can be achieved by a motorized mount of the camera rig which moves such that it follows the object.

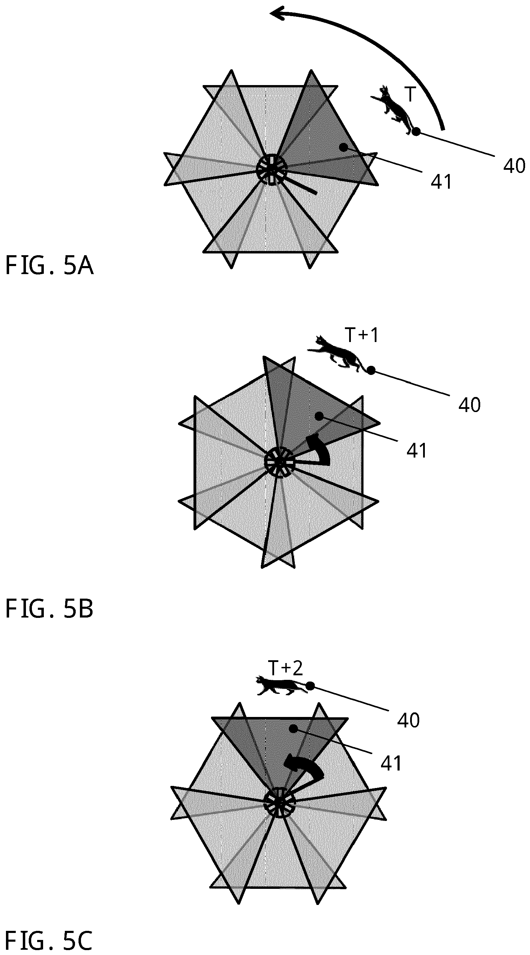

This is illustrated in FIGS. 5A - 5C which show again as an example for a moving object 40 a cat having different positions at the points of time T, T+1, and T+2. As shown in FIG. 5A, the cat is at a first point in time T again completely and solely in the central part 41 of the angle of view of a first camera. However, in order to avoid that the cat moves in an overlapping area of the angle of views with one of the two adjacent cameras, the first camera now becomes a reference camera, which follows the cat. This is made possible by using a motorized 360 degree camera rig which allows a horizontal rotation.

In the shown example, the cat moves counterclockwise around the 360 degree camera rig. Correspondingly, the motor of the motorized camera rig causes it to rotate counterclockwise, as indicated by the arrow in FIG. 5B, which shows the scene at a later point in time T+1. As a result, at T+1, the cat is still centered in the field of view of the reference camera instead of being in the overlapping area, which would be the case for the fixed camera rig of FIG. 4.

Similarly, also at T+2 the cat is completely and solely in the angle of view of the reference camera, as shown in FIG. 5C. However, contrary to the fixed camera rig of FIG. 4. the cat is not captured at T+2 by a different camera but still by the reference camera. Since the cat remains all the time in the central part 41 of the same camera and does at no time move into an overlapping area, the image of the cat is not subject to any stitching and therefore no artefacts caused by stitching could appear.

In an embodiment, a method for capturing video content with at least two cameras of a multi-camera rig may include:
- capturing a part of the video content with one of the at least two cameras;
- selecting an object in the captured part of the video content; and
- automatically moving the multi-camera rig such that the one of the at least two cameras follows the selected object.

In some embodiments, the method may also include:
- selecting the one of the at least two cameras as a reference camera;
- setting a spatial reference position of that reference camera at the time of the selection of the selected object;
- tracking the selected object; and
- obtaining an adapted spatial reference position for the reference camera based on the tracking.

In some embodiments, the method may also include that the multi-camera rig is automatically moved such that the reference camera moves to the adapted spatial reference position.

In some embodiments, the method may also include that individual images captured by adjacent cameras have a common, overlapping area.

In some embodiments, the method may also include that the object and the reference camera are selected such that the object is not within a common, overlapping area of adjacent cameras and such that the adapted spatial reference position of the reference camera is such that the selected object does not move into common, overlapping area.

In some embodiments, the method may also include that the selected object is centered in the field of view of the reference camera.

In some embodiments, the method may also include receiving a user input for selecting the object.

In some embodiments, the method may also include that said object is automatically selected based on at least one of the following algorithms: a region of interest detection algorithm, a face detection algorithm, or a motion analysis algorithm.

In some embodiments, the method may also include:
- scheduling time slots for automatically moving the multi-camera rig;
- automatically moving the multi-camera rig during the scheduled time slots; and
- interrupting the video acquisition during the scheduled time slots.

Some embodiments may also include that the multi-camera rig is capturing 360° video content and the individual images captured by the cameras of the multi-camera rig are stitched together to form a single continuous 360° image.

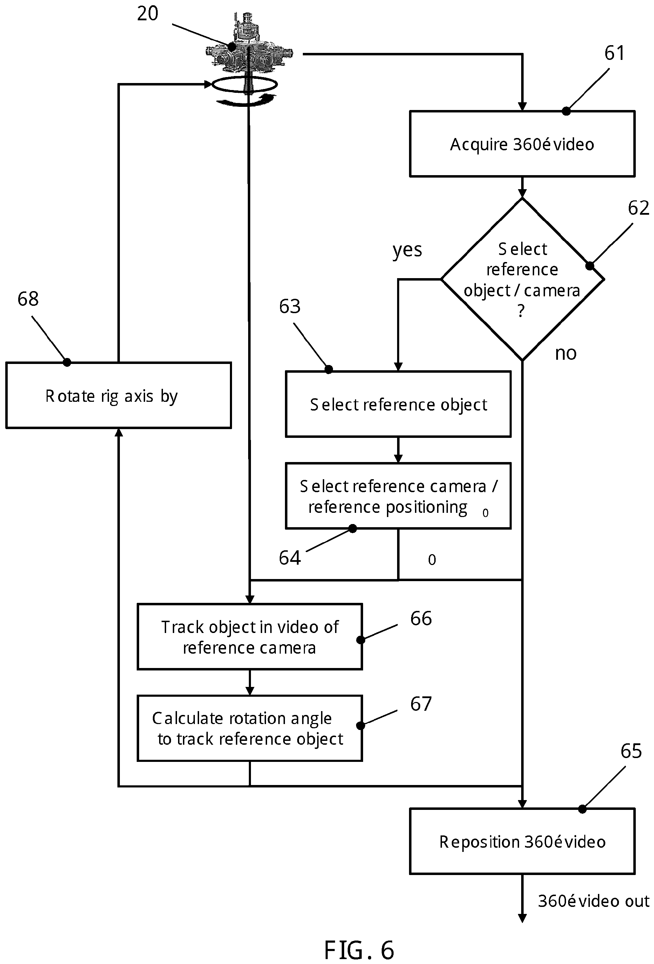

Turning now to FIG. 6, a flowchart of an exemplary method for capturing video content with at least two cameras of a multi-camera rig is shown and discussed in detail.

A multi-camera rig 20 comprises six cameras horizontally arranged in a circle which capture a 360 degree video surrounding the multi-camera rig. In addition, a seventh camera covers the area above the multi-camera rig. However, even if this seventh camera generates video signals, they are not taking into account in the following description of the method.

The video signals are captured by the horizontally arranged cameras in a 360 degree video acquisition step 61 in which the respective video content captured by the six cameras is stitched together to generate a 360 degree image. The video acquisition step may also include some pre-Processing, such as trimming, color format conversion, color correction, or de-noising.

In the following step 62 it is checked whether a reference object to be tracked and a reference camera tracking the reference object is to be selected. This can happen because none has been selected so far at all. Exemplary other reasons for selecting a new reference object, and if necessary also a new reference camera, can be that the reference object selected at an earlier time is no longer in the viewing range of the multi-camera rig or is no longer considered as the key object of the captured scene.

If no reference object has been selected so far or a new reference object is to be selected, the method proceeds to step 63. In this step a key object of the scene is chosen for tracking. Such key objects could be for example a person or an animal in a scene which otherwise only shows landscape, the main character in case of several persons being present at the scene or any other object on which the viewer of the 360° video content shall look at or may be interested to focus on.

The selection can be done either manually or automatically. For a manual selection, a person being in charge of taking the 360° view content, for example a director, a camera man or a private person capturing the 360° video content, could choose the object using an interface showing the preview of the 360° video content part of it. In order to automatically select a new reference object, the video content can be analyzed using algorithms such as a region of interest detection algorithm, a face detection algorithm, or a motion analysis algorithm. Also, a combination is possible, where based on the outcome of an algorithmic analysis a proposal for a reference object is automatically provided to a user as a director of photography or a videographer, for example by highlighting or framing it in the preview on the screen, which is then manually accepted or rejected by the videographer. Finally, it is also possible to provide based on the algorithmic analysis several possible reference objects, from which the videographer can choose the most appropriate one.

Furthermore, in one embodiment it can also be checked whether the potential reference object is small enough to be completely located within the viewing angle of a particular camera without partially being in an overlapping area with an adjacent camera. If this is the case, the selection of the potential reference object could be validated, if not so, the selection could be declined, or a warning could be provided to the videographer.

After the selection of the reference object, out of the cameras of the multi-camera rig that camera, which is oriented such that it captures the reference object, is selected as reference camera for tracking the reference object in step 64. Also, this can be done either manually by the videographer or automatically. In addition, a spatial reference position of that reference camera is determined, which gives the angular position α₀ in relation to an initial direction of the multi-camera rig, the mounting of the cameras or any other suitable reference point. Corresponding to the determined spatial reference position of the reference camera, the 360° video content is repositioned in step 65 and output for further processing.

Furthermore, following the selecting of both the reference object and the reference camera, the reference object is tracked in step 66 as long as it is in the viewing range of the reference camera and remains the reference object to be followed. To perform the visual tracking an algorithm analyzes sequential video frames and outputs the movement of the reference object from one frame to the next frame. However, the tracking is not restricted to video based methods, also any other the method for providing a timely ordered sequence of location data for the reference object can be used instead or in addition. For example, such location data could also be provided by using ultrasonic or radar sensors integrated in the multi-camera rig.

Based on the change in position of the reference object the rotation angle α is calculated in the following step 67. Corresponding to this rotation angle α, the 360° video content is repositioned during the tracking in step 65 so that despite the rotation of the multi-camera rig the viewpoint on the 360° video content, as provided later to a viewer, does not change. This ensures that the viewer does not notice the camera movement and can view the 360° video content without visually perceptual disturbances.

Furthermore, the rotation angle α is applied in step 68 to the rotational mechanics of the multi-camera rig, in order to keep the reference object in the central part of the reference camera by rotating the device by the angle α, and the acquisition of the 360° video content continues with the repositioned multi-camera rig in step 61. In the following, as long as the selected reference object continues to be tracked, the selection steps 63 and 64 are bypassed.

If the reference object selected and tracked so far shall be replaced by a new reference object, this new reference object is going to be selected in step 63. If this new reference object falls in the field of view of a camera different to the camera selected as reference camera so far, in addition a new reference camera is set in step 64. However, in case the new reference object still falls in the field of view of the current reference camera, step 64 can be skipped.

In one embodiment, the multi-camera rig is put on a motorized high-precision rotation mount, which provides a precise, fine and jerk-free rotation and thus ensures a smooth acquisition of the 360° video content. In another embodiment, for smoothing the acquisition some regular time slots can be scheduled and dedicated to the motion of multi-camera rig during which no video acquisition is done.

While the above embodiments are based on the assumption that the multi-camera rig is at a fixed position and the reference object is moving, the same concepts can also be applied in case of a reference object at a fixed position and a multi-camera rig moving through the scene to be captured.

In an embodiment, a multi-camera rig, may include:
- a video capture system with at least two cameras;
- a moving device; and
- a processor configured to select an object in a part of video content captured with one of the at least two cameras, to track the selected object, and to cause the moving device to move the video capture system such that the one of the at least two cameras follows the tracked object.

In some embodiments, the multi-camera rig may also include that the moving device comprises a rotation motor, which rotates the video capture system to follow the tracked object.

In some embodiments, the apparatus may also include a user interface receiving a user input for selecting the object.

In some embodiments, the multi-camera rig may also include that the processor is further configured to automatically select said object based on a video content analysis algorithm.

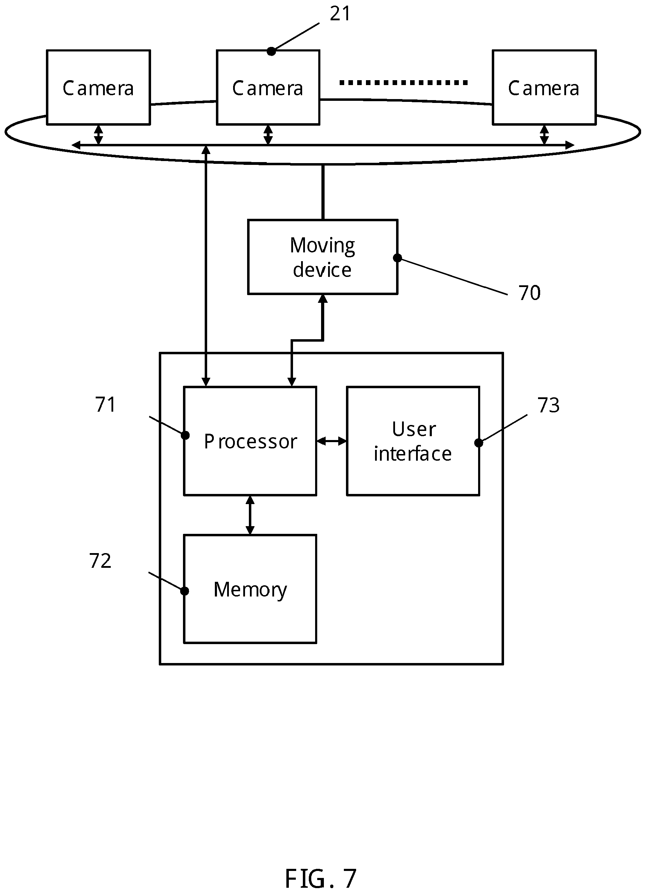

A block diagram of a multi-camera rig in accordance with one embodiment of the present disclosure is illustrated in Fig 7. The multi-camera rig comprises a processor 71, which for example can be a central processing unit (CPU). The processor 71 is coupled to a memory 72, in which data and/or computer program instructions are stored. However, multiple processors and/or multiple memories may also be provided. In particular, an additional graphics processing unit (GPU) may be dedicated to the video content analysis.

Furthermore, the multi-camera rig comprises a user interface 73 coupled to the processor. The user interface 73 allows a user to select a reference object and/or a reference camera. For this purpose, the user interface may comprise a display on which a preview of the 360° video content can be displayed. Furthermore, the user interface may receive user input for selecting a new reference object. In one embodiment, the user input may be provided using input means such as mechanical buttons, a mouse, or a touchpad. In another embodiment the user interface may comprise a touchscreen display enabling both the display of the preview to the user and the selection of the reference object by the user. The display part of the touchscreen display may for example include a liquid crystal display or an organic light emitting display. For sensing the touch of a user, the touchscreen display can use different technologies such as e.g. a resistive or capacitive touchscreen panel.

A moving device 70 is also coupled to the processor. In one embodiment of the moving device 70 is a rotation motor connected with the mounting system or housing of a video capture system. The video capture system comprises several cameras 21. Each camera captures a part of the scene surrounding the multi-camera rig and provides a video signal representing a part of the 360° video content to the processor for the further processing.

## Claims

1. A method for capturing video content with at least two cameras of a multi-camera rig, the method comprising:
- capturing a part of the video content with one of the at least two cameras;
- selecting an object in the captured part of the video content; and
- automatically moving the multi-camera rig such that the one of the at least two cameras follows the selected object.

2. The method according to claim 1, further comprising:
- selecting the one of the at least two cameras as a reference camera;
- setting a spatial reference position of that reference camera at the time of the selection of the selected object;
- tracking the selected object; and
- obtaining an adapted spatial reference position for the reference camera based on the tracking.

3. The method according to claim 2, wherein the multi-camera rig is automatically moved such that the reference camera moves to the adapted spatial reference position.

4. The method according to any of the preceding claims, wherein individual images captured by adjacent cameras have a common, overlapping area.

5. The method according to claim 4, wherein the object and the reference camera are selected such that the object is not within a common, overlapping area of adjacent cameras and wherein the adapted spatial reference position of the reference camera is such that the selected object does not move into a common, overlapping area.

6. The method according to claim 5, wherein the selected object is centered in the field of view of the reference camera.

7. The method according to any of the preceding claims, further comprising:
- receiving a user input for selecting the object.

8. The method according to any of claims 1 to 6, wherein said object is automatically selected based on at least one of the following algorithms: a region of interest detection algorithm, a face detection algorithm, or a motion analysis algorithm.

9. The method any of the preceding claims, further comprising:
- scheduling time slots for automatically moving the multi-camera rig;
- automatically moving the multi-camera rig during the scheduled time slots; and
- interrupting the video acquisition during the scheduled time slots.

10. The method any of the preceding claims, wherein the multi-camera rig is capturing 360° video content and the individual images captured by the cameras of the multi-camera rig are stitched together to form a single continuous 360° image.

11. Multi-camera rig, comprising:
- a video capture system with at least two cameras;
- a moving device; and
- a processor configured to select an object in a part of video content captured with one of the at least two cameras, to track the selected object, and to cause the moving device to move the video capture system such that the one of the at least two cameras follows the tracked object.

12. Multi-camera rig according to claim 11, wherein the moving device comprises a rotation motor, which rotates the video capture system to follow the tracked object.

13. Multi-camera rig according to claim 11 or 12, further comprising:
- a user interface receiving a user input for selecting the object.

14. Multi-camera rig according to claim 11 or 12, wherein the processor is further configured to automatically select said object based on a video content analysis algorithm.

15. A computer program code that, when executed by at least one processor, causes the method of any of claims 1 to 10 to be performed.
